# EUROPEAN PATENT SPECIFICATION

(11) **EP 3 592 603 B1**
(45) Date of publication and mention of the grant of the patent: **28.09.2022**
(21) Application number: 18852756.8
(22) Date of filing: 06.03.2018
(51) Int. Cl.: B60Q 1/04, B60Q 1/00, B60Q 1/24, F21S 41/19, F21S 41/143, F21S 41/29, F21S 41/20, F21S 41/32, F21S 41/36, F21S 45/50, F21S 41/153, F21S 45/48

(54) **WORK LAMP WITH HERMETIC LED**
ARBEITSPLATZLEUCHTE MIT HERMETISCHER LED
LAMPE DE TRAVAIL À LED HERMÉTIQUE

(30) Priority: 06.03.2017 TR 201703364
(43) Date of publication of application: 15.01.2020
(73) Proprietor: Serdar Plastik Sanayi Ve Ticaret Anonim Sirketi, 06395 Sincan/Ankara (TR)
(72) Inventor: TÜTEK, Serdar, 06395 Sincan/Ankara (TR)
(74) Representative: Weickmann & Weickmann PartmbB
(86) International application number: PCT/TR2018/000017
(87) International publication number: WO 2019/083468

(56) References cited:
- EP-A1- 2 206 628
- EP-A2- 2 009 345
- GB-A- 2 424 472
- JP-A- 2012 158 286
- KR-B1- 101 322 683
- US-A1- 2014 268 746
- US-B1- 7 950 821

## Description

### Technical Field of the Invention

The present invention relates to highly hermetic LED work lamp used especially at the tractors, heavy equipment, forklift and commercial vehicles at the automotive sector.

### State of the Art

The work lamps used at the heavy equipment, tractors, forklifts and commercial vehicles are lighting equipment either assembled via bolts or agglutinated, and repaired by dismantling and reassembly of the parts in case of any malfunction.

The assembly of this type of work lamps is possible either by agglutinating the parts to each other, or by joining the parts with bolts. Due to this structure, when the work lamps malfunction at the field during use due to any fault, and if the user fails to reassemble the connector equipment correctly after dismantling the lamp, repairing the fault and reassembling the work lamp, water, dust, etc. might enter therein, thus preventing the lamp to carry out its function. KR101322683B discloses a LED work lamp for heavy equipment, installable externally to a vehicle, wherein the lamp comprises: a frame, a lens, a reflector, a sealing gasket, a LED card, a joint, an anchoring bolt, a fibered nut, an U-joint, a connecting screw, a washer and a nut, wherein the reflector, the LED-card are contained in the frame, wherein the joint, the anchoring bolt, the fibered nut, the U-Joint, the connecting screw, the washer and the nut are part of a joint group for connecting the lamp to the vehicle. The lens is fixed to the frame by bolting the lens cover to the frame.

While plastic or aluminum is used as raw materials at the lamps of the prior art currently in use, the lamp presented herein contains thermal conductor material, whereby the heat generated within the lamp is transferred to outdoors at the max level, thus allowing the lamp of the invention to be more durable that the prior art lamps. The sealing gasket (thermoplastic material TPV) as designed herein is placed between the lens and the frame in order to ensure full tightness at the LED work lamp grouped without any connectors.

### Brief Description of the Invention

The present invention relates to a LED work lamp according to claim 1. The LED work lamp has a trame manufactured from thermal conductor material, wherein the lamp is formed by parts in quantities as minimum as possible and is assembled without any connectors, and contains LED card therein, and comprises of thin-walled square, rectangle, elliptical or round shaped body that facilitate exhaustion of heat therein in compliance with the structure of the vehicle it is installed, and complex parabola reflector and lens with assembly clamps thereon and a sealing gasket installed in-between.

### Brief Description of the Figures

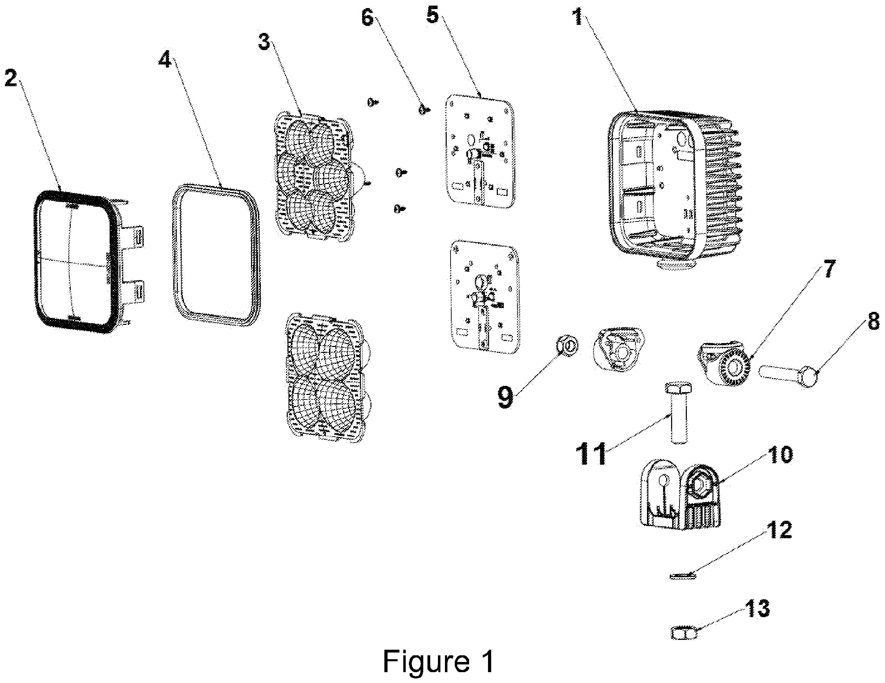

**Figure 1****.** The exploded view of the Work Lamp

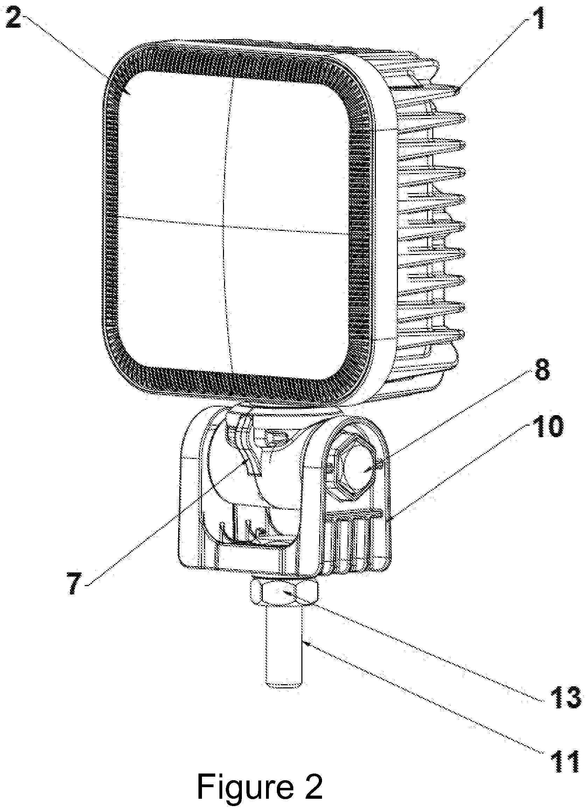

**Figure 2****.** Perspective front view of the Work Lamp

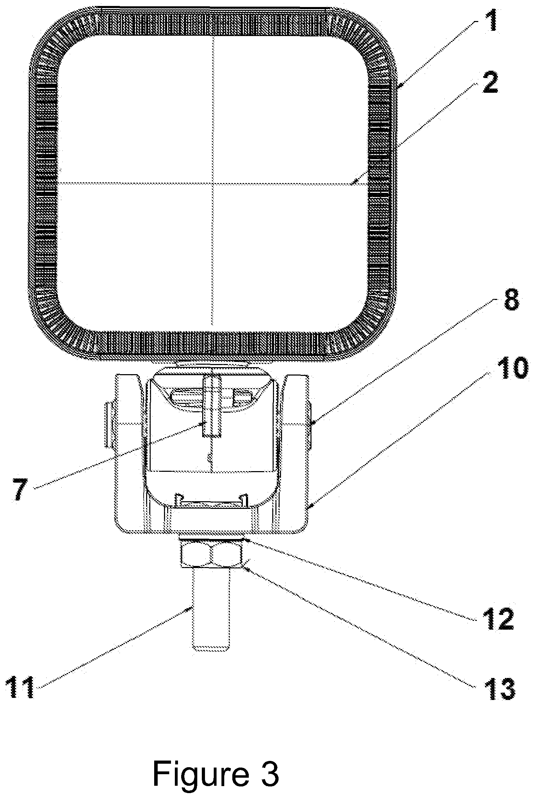

**Figure 3****.** Detailed front view of the Work Lamp

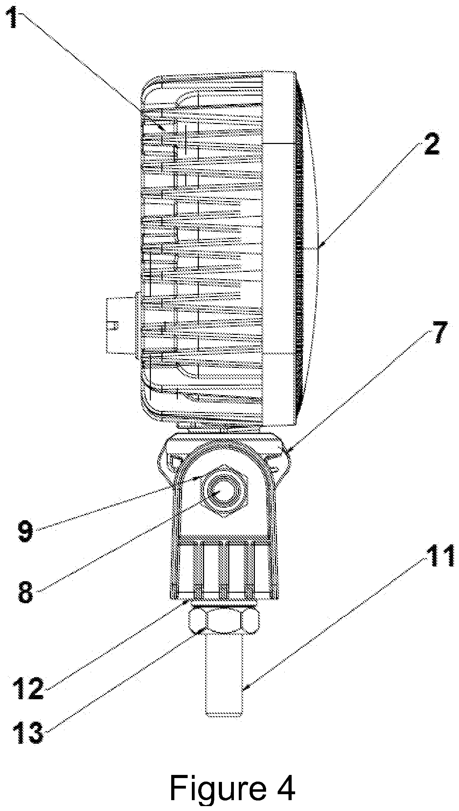

**Figure 4****.** Detailed side view of the Work Lamp

### List of References Used in the Figures

- 1-: Frame
- 2-: Lens
- 3-: Complex parabola reflector
- 4-: TPV sealing gasket
- 5-: LED card
- 6-: LED card anchor bolt
- 7-: Joint
- 8-: Anchor bolt
- 9-: Fibered nut
- 10-: U-Joint
- 11-: Anchor bolt
- 12-: Washer
- 13-: Nut

The LED work lamp of the invention is a LED lighting equipment characterized with frame (1) in various geometric shapes such as square, rectangle, ellipse or circle, lens (2), complex parabola reflector (3) joint group.

The external structure of the frame (1) that contains the complex parabola reflector (3) and the LED card (5) has distinct shapes formed with thin plastic walls so-called feeder, and said feeder structure so-formed not only contributes to exhausting the high temperature build-up within the lamp, but also provides resistance to the work lamp against the negative external factors such as impacts, water, heat, etc.

The second part of the work lamp, the lens (2), is fully sealed by means of the TPV sealing gasket (thermoplastic material) (4) installed thereon. The lamp is characterized with assembly without any need for connectors by virtue of the clamp structure available on the lens (2).

The third part of the work lamp comprises of the joint group connecting the lamp and the vehicle.

The joint group comprises of joint (7), anchor bolt (8), fibered nut (9) that prevents displacement due to vibration, the anchor bolt (11), the plain nut (13) and the washer (12).

## Claims

1. A LED work lamp for tractors, heavy equipment, forklift and commercial vehicles at the automotive sector, installable externally to a vehicle, wherein the lamp comprises:
a frame (1), a lens (2), a reflector (3), a TPV sealing gasket (4), a LED card (5), a LED card anchoring bolt (6), a joint (7), an anchoring bolt (8), a fibered nut (9), an U-joint (10), a connecting screw (11), a washer(12) and a nut (13), wherein the reflector (3), the LED-card and the LED card anchoring bolt (6) are contained in the frame (1), wherein the joint (7), the anchoring bolt (8), the fibered nut (9), the U-Joint (10), the connecting screw (11), the washer(12) and the nut (13) are part of a joint group for connecting the lamp to the vehicle, and wherein the lamp is assembled without requiring any additional assembly component by virtue of the clamped structure on the lens (2) and the TPV sealing gasket (4) installed between the frame (1) and the lens (2), wherein the frame (1) is manufactured from thermal conductor material.

2. A work lamp according to claim 1, **characterized in that**; the joint (7) allows installation of the lamp externally to the vehicle and is used for regulating the position and angle by virtue of the round shape that is manually rotated depending on the area of use.

## Patentansprüche

1. LED-Arbeitsleuchte für Traktoren, schweres Gerät, Gabelstapler und Nutzfahrzeuge im Automobilsektor, die außen an einem Fahrzeug installiert werden kann, wobei die Leuchte umfasst:
einen Rahmen (1), eine Linse (2), einen Reflektor (3), eine TPV-Dichtung (4), eine LED-Karte (5), einen LED-Karten-Verankerungsbolzen (6), ein Gelenk (7), einen Verankerungsbolzen (8), eine Fasermutter (9), ein U-Gelenk (10), eine Verbindungsschraube (11), eine Unterlegscheibe (12) und eine Mutter (13), wobei der Reflektor (3), die LED-Karte und der LED-Karten-Verankerungsbolzen (6) in dem Rahmen (1) enthalten sind,
wobei das Gelenk (7), der Verankerungsbolzen (8), die Fasermutter (9), das U-Gelenk (10), die Verbindungsschraube (11), die Unterlegscheibe (12) und die Mutter (13) Teil einer Gelenkgruppe zur Verbindung der Leuchte mit dem Fahrzeug sind, und
wobei die Leuchte aufgrund der Klemmstruktur an der Linse (2) und der zwischen dem Rahmen (1) und der Linse (2) installierten TPV-Dichtung (4) ohne zusätzliche Montagekomponenten zusammengebaut wird,
wobei der Rahmen (1) aus wärmeleitendem Material hergestellt ist.

2. Arbeitsleuchte nach Anspruch 1, **dadurch gekennzeichnet, dass** das Gelenk (7) eine Installation der Leuchte außen an dem Fahrzeug ermöglicht und zur Regulierung der Position und des Winkels aufgrund der runden Form dient, die je nach Einsatzbereich manuell gedreht wird.

## Revendications

1. Lampe de travail à LED pour tracteurs, équipements lourds, chariots élévateurs et véhicules commerciaux dans le secteur automobile, pouvant être installée à l'extérieur sur un véhicule, dans laquelle la lampe comprend : un châssis (1), une lentille (2), un réflecteur (3), un joint d'étanchéité TPV (4), une carte à LED (5), un boulon d'ancrage de carte à LED (6), une articulation (7), un boulon d'ancrage (8), un écrou fibré (9), une articulation en U (10), une vis de connexion (11), une rondelle (12) et un écrou (13),
dans laquelle le réflecteur (3), la carte à LED et le boulon d'ancrage de carte à LED (6) sont contenus dans le châssis (1), dans laquelle l'articulation (7), le boulon d'ancrage (8), l'écrou fibré (9), l'articulation en U (10), la vis de connexion (11), la rondelle (12) et l'écrou (13) font partie d'un groupe d'articulation pour la connexion de la lampe au véhicule, et dans laquelle la lampe est assemblée sans recourir à un composant d'assemblage supplémentaire du fait de la structure encastrée sur la lentille (2) et le joint d'étanchéité TPV (4) installé entre le châssis (1) et la lentille (2), dans laquelle le châssis (1) est constitué d'un matériau thermo-conducteur.

2. Lampe de travail selon la revendication 1, **caractérisée en ce que** l'articulation (7) permet l'installation de la lampe à l'extérieur du véhicule et est utilisée pour réguler la position et l'angle grâce à sa forme ronde qui est mise en rotation manuellement en fonction de la zone d'utilisation.
